# EUROPEAN PATENT SPECIFICATION

(11) **EP 2 986 193 B1**
(45) Date of publication and mention of the grant of the patent: **29.07.2020**
(21) Application number: 13721280.9
(22) Date of filing: 15.04.2013
(51) Int. Cl.: A47L 9/04, A47L 9/00

(54) **ROBOTIC VACUUM CLEANER WITH PROTRUDING SIDEBRUSH**
ROBOTISCHER STAUBSAUGER MIT VORSTEHENDEN SEITENBÜRSTEN
DISPOSITIF DE NETTOYAGE SOUS VIDE ROBOTISÉ AVEC BROSSE LATÉRALE SAILLANTE

(43) Date of publication of application: 24.02.2016
(73) Proprietor: Aktiebolaget Electrolux, 105 45 Stockholm (SE)
(72) Inventor: HAEGERMARCK, Anders, S-142 63 Trångsund (SE)
(74) Representative: Electrolux Group Patents
(86) International application number: PCT/EP2013/057815
(87) International publication number: WO 2014/169944

(56) References cited:
- WO-A1-2007/008148
- DE-A1- 4 211 789
- DE-A1- 4 340 367
- US-A1- 2013 086 760
- US-S1- D 526 753

## Description

### TECHNICAL FIELD

The invention relates to a robotic vacuum cleaner.

### BACKGROUND

Robotic vacuum cleaners are known in the art, which are equipped with drive means in the form of a motor for moving the cleaner across a surface to be cleaned. The robotic vacuum cleaners are further equipped with intelligence in the form of microprocessor(s) and navigation means for causing an autonomous behaviour such that the robotic vacuum cleaners freely can move around and clean a space in the form of e.g. a room.

Traditionally, robotic vacuum cleaners have been arranged with circular-shaped main bodies. Such a robot having co-axial drive wheels at the centre of its body has the advantage that it is easy to control and cannot get stuck since it always can rotate 180° and go back the same way it came. However, the circular-shaped main body makes them unsuitable for cleaning corners or edges where a floor meets a wall since these circular vacuum cleaners due to their shape cannot move into a corner or close enough to a wall, or other objects around which cleaning is required such as e.g. chair legs. An example of a robotic vacuum cleaner aiming at solving this problem is disclosed in WO 03/024292, the main body of which at its rear end is circular-shaped, whereas the front end of the main body is substantially rectangular. This is an improvement over the traditional circular-shaped robotic vacuum cleaners in terms of reaching into corners. Further, sweeping brushes are arranged at a bottom side of the main body and disposed such that they are associated with front corner regions of the rectangular-shaped main body front end. However, the robotic vacuum cleaner disclosed in WO 03/024292 still has problems reaching into corners

US D526753 S discloses an ornamental design for an electric vacuum cleaner having a substantially circular body. Two side brushes are arranged at each side of a front part of the cleaner.

In US2013/086740A1 a robot cleaner is disclosed provided with at least one side brush assembly mounted to the main body of the cleaner. The side brush assembly includes a side arm pivotably coupled to the main body and capable of moving between a first position where the side arm is inserted into the main body and a second position where the side arm protrudes outward from the lateral rim of the main body. The side arm is provided with a brush unit. A rim cover is coupled to the side arm to form a part of the lateral rim of the main body when the side armis inserted into the main body.

### SUMMARY

An object of the present invention is to solve or at least mitigate a problem of how to provide a robotic vacuum cleaner for navigating corners and turning around in narrow spaces.

This object is attained by a robotic cleaning device comprising a main body, at least one driving wheel arranged to move the robotic cleaning device across a surface to be cleaned, and driving means arranged to control the at least one driving wheel to rotate in order to move the robotic cleaning device across the surface to be cleaned. Further, the robotic cleaning device comprises control means arranged to control the driving means to move the robotic cleaning device across the surface to be cleaned in accordance with navigation information and a cleaning member arranged at a bottom side of the main body for removing debris from the surface to be cleaned, the cleaning member being arranged in a front end portion of the main body, wherein the main body comprises at the front end portion, a horizontally protruding member on which a brush is arranged.

Advantageously, by providing the main body of the robotic vacuum cleaner with the horizontally protruding member and the brush, the robotic cleaning device is capable of reaching into and cleaning corners and other areas where prior art robotic vacuum cleaners cannot reach. Advantageously, the brush which preferably rotates is guided by the protruding member into a corner and moves the debris located out of reach of the cleaning member of the robotic cleaning device such that the debris ends up under the main body and thus can be transported to a dust bag of the robotic vacuum cleaner 10 via the cleaning member 15. Thus, debris and dust located at the very walls and corners can be removed by the robotic cleaning device.

In an embodiment of the present invention, the main body has a front end portion with a front end wall, a rear end portion, a right side wall connecting the front end wall and the rear end portion and a left side wall connecting the front end wall and the rear end portion. The main body thus have a three-lobed shape in this particular embodiment, which is advantageous for moving in and out of corners and navigating narrow spaces like for instance corridors.

In a further embodiment of the present invention, the main body is further arranged such that its width is greatest between an outermost point of the horizontally protruding member and the oppositely located side wall, which greatest width is located at the front end portion of the main body. Since the width of the main body is at its greatest in a lateral direction between the right side wall and the left side wall at the front end portion of the main body, the robotic cleaning device according to embodiments of the present invention can move into a corner and turn the corner to move along an intersecting wall without bumping its rear end portion into the wall leading into the corner. In an embodiment of the present invention, the side walls of the main body are curved. Advantageously, they will thus track the wall leading into the corner when the robotic cleaning device turns the corner and pursues the wall leading out of the corner.

In still another embodiment of the present invention, the cleaning member is arranged adjacent to the front end wall and extending laterally in an opening in the main body along a greater part of the front end wall. Thereby, the robotic cleaning device advantageously cleans an area as wide as possible which contributes to reducing time (and energy consumption) needed to clean a surface.

In yet another embodiment of the present invention, the robotic cleaning device further comprises obstacle detecting means arranged to detect obstacles and provide the control means with the navigation information for enabling navigation of the robotic cleaning device.

In a further embodiment of the present invention, the robotic cleaning device further comprises a flexible bumper enclosing at least the front end portion of the main body. Advantageously, as long as the robotic cleaning device moves forward, the only part of the main body that can run into obstacles is the bumper, implying that collisions with all obstacles can be detected by the bumper. The shape of the main body of the robotic cleaning device as proposed in embodiments of the present invention in combination with appropriate control of the movement of the cleaning device ensures that the robot can maneuver out of all situations when the bumper has detected an obstacle, just like prior art robotic vacuum cleaners having circular-shaped main bodies, and - in contrast to prior art circular-shaped robot cleaners - that corners further can be effectively cleaned.

Further, since the bumper is flexible, it will press resiliently against the front end wall when contacting obstacles, thus mitigating the thrusting effect it has on obstacles in its way and reducing the risk that the obstacles will be displaced, tipped over and/or be damaged.

Thus, the obstacle detecting means may comprises the flexible bumper and at least one sensor with which the flexible bumper is arranged to cooperate in order to register the robotic cleaning device contacting an obstacle, which sensor is arranged to communicate the navigation information to the control means.

In a further embodiment, an indentation is arranged in the front end portion of the main body adjacent to a respective one of the one or more protruding member(s) and associated brush(es). This is advantageous since the brush can reach around the periphery of smaller obstacles, such as chair legs. By having the indentation enclosing, or at least partly enclosing, the periphery of the smaller obstacles, the area around the obstacles can be more effectively cleaned.

It is noted that the invention relates to all possible combinations of features recited in the claims. Further features of, and advantages with, the present invention will become apparent when studying the appended claims and the following description. Those skilled in the art realize that different features of the present invention can be combined to create embodiments other than those described in the following.

### BRIEF DESCRIPTION OF THE DRAWINGS

The invention is now described, by way of example, with reference to the accompanying drawings, in which:
Figure 1a shows a robotic cleaning device according to an embodiment of the present invention in a top view;
Figure 1b shows the robotic cleaning device of Figure 1a in a bottom view;
Figure 2a shows a robotic cleaning device according to a further embodiment of the present invention in a bottom view;
Figure 2b shows the contour of the main body of the robotic cleaning device of Figure 2a in a bottom view;
Figure 3 illustrates a sequence a-f of movements of the robotic cleaning device of Figure 2a navigating into and out of two corners in a narrow corridor in a bottom view;
Figure 4 shows a robotic cleaning device comprising a flexible bumper according to another embodiment of the present invention in a bottom view;
Figure 5a shows a robotic cleaning device comprising an indentation adjacent to the protruding member according to a further embodiment of the present invention in a bottom view;
Figure 5b shows the robotic cleaning device according to Figure 5a when cleaning around small objects in a bottom view; and
Figure 6 shows a robotic cleaning device according to a further embodiment of the present invention in a bottom view.

### DETAILED DESCRIPTION

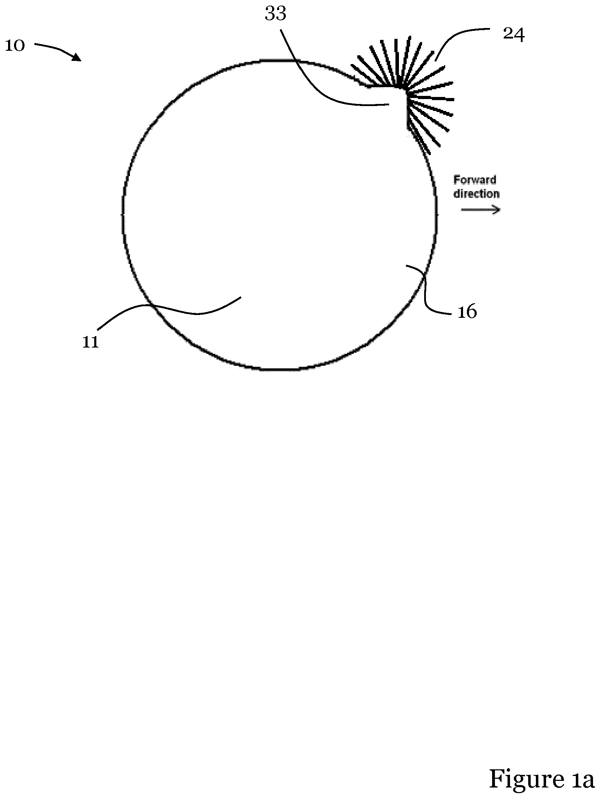

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. All figures except Figure 1a shows the robotic cleaning device from a bottom perspective. Directional information, such as e.g. "a right side wall" of the cleaning device should be construed as meaning the side wall on the right hand side of the main body from a top perspective of the cleaning device when viewed from its rear end portion.

The invention relates to robotic cleaning devices, or in other words, to automatic, self-propelled machines for cleaning a surface. The robotic cleaning device according to the invention can be mains-operated and have a cord, be battery-operated or use any other kind of suitable energy source, for example solar energy.

Figure 1a shows a robotic cleaning device 10 according to an embodiment of the present invention from above, i.e. a top side of the robotic cleaning device is displayed. The robotic cleaning device 10 comprises a main body 11 housing a variety of components as will be discussed in more detail in the following. The main body 11 is further arranged, in a front portion 16, with a horizontally protruding member 33 on which a brush 24 is arranged. Advantageously, by arranging the robotic cleaning device, which in this particular exemplifying embodiment has a circular shape, with a protruding brush 24, its reach will be greatly improved and e.g. corners are much more effectively cleaned.

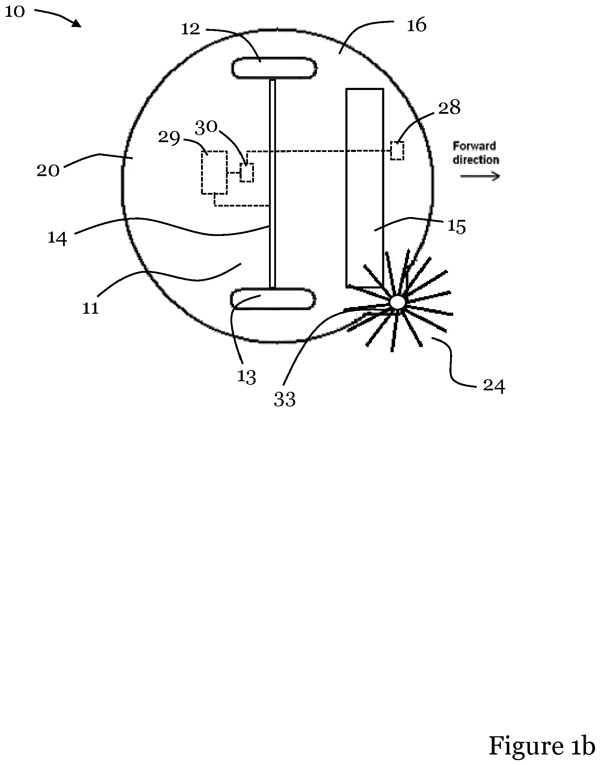

Figure 1b shows the robotic cleaning device 10 of Figure 1a from below, i.e. a bottom view is displayed. The robotic cleaning device 10 comprises a main body 11 housing components such as driving means 29 in the form of an electric motor for enabling movement of the driving wheels 12, 13 such that the cleaning device can be moved over a surface to be cleaned.

In this particular exemplifying illustration, the driving wheels 12, 13 are coaxially arranged along a drive shaft 14. The electric motor 29 is capable of controlling the driving wheels 12, 13 to rotate independently of each other in order to move the robotic cleaning device 10 across the surface to be cleaned. A number of different driving wheel arrangements can be envisaged.

Further, the main body 11 is arranged with a cleaning member 15 for removing debris and dust from the surface to be cleaned. This is in an embodiment of the present invention implemented by means of a suction fan (not shown) creating an air flow for transporting debris to a dust bag or cyclone arrangement housed in the main body via an opening in the bottom side of the main body 11. In a further embodiment, the cleaning member 15 could be embodied in the form of a rotatable brush roll vertically arranged in the opening to enhance the dust and debris collecting properties of the cleaning device 10. The main body 11 may further optionally comprise obstacle detecting means 28 for detecting obstacles in the form of walls, floor lamps, table legs, around which the robotic vacuum cleaning must navigate by having a controller 30 such as a microprocessor control the motor 29 to rotate the driving wheels 12, 13 as required in view of navigation information received by the obstacle detecting means. This will be further discussed subsequently. The obstacle detecting means 28 may be embodied in the form of infrared (IR) sensors and/or sonar sensors, a microwave radar, a camera registering its surroundings, a laser scanner, etc. for detecting obstacles and communicating information about any detected obstacle to the microprocessor 30 in order to have the motor 29 control movement of the wheels 12, 13 in accordance with navigation information provided by the obstacle detecting means 28.

Even though it would suffice to have the cleaning member 15, i.e. the opening in the bottom side of the main body 11 via which a suction fan creates an air flow and/or in which a rotatable brush roll possibly is arranged, arranged in the front end portion 16 adjacent to the brush 24, in an embodiment of the present invention, the opening (and possibly the brush roll) extends laterally in the main body 11 along a greater part of the front end portion 16. Thereby, the robotic cleaning device 10 advantageously cleans an area as wide as possible which contributes to reducing time (and energy consumption) needed to clean a surface. As can be seen in Figure 1b, the brush 24 is in an embodiment a rotational brush with its centre of rotation arranged on a distance from the main body 11 thus enabling reaching into corners.

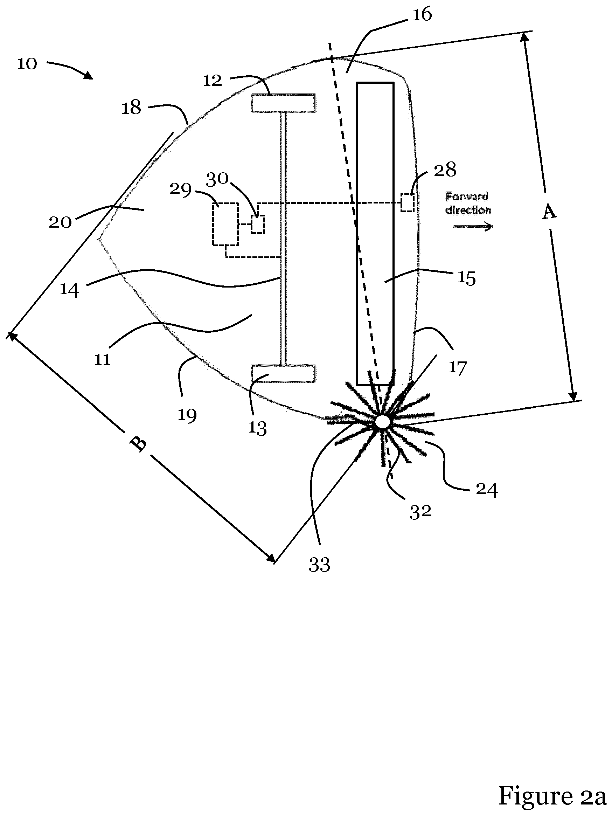

Figure 2a shows a robotic cleaning device 10 according to a further embodiment of the present invention in a bottom view. The robotic cleaning device 10 comprises a main body 11 housing components such as driving means 29 in the form of an electric motor for enabling movement of the driving wheels 12, 13 such that the cleaning device can be moved over a surface to be cleaned.

In this particular embodiment, the main body 11 has a front end portion 16 with a front end wall 17, a rear end portion 20, a right side wall 18 connecting the front end wall 17 and the rear end portion 20 and a left side wall 19 connecting the front end wall 17 and the rear end portion 20. The front end portion 16 of the main body 11 of the robotic cleaning device 10 is the portion of the main body 11 located between drive shaft 14 and a front end wall 17. In an embodiment of the present invention, the front end portion 16 is essentially quadrilateral-shaped, possibly with slightly rounded corners where the front end wall 17 meets the right side wall 18 and the left side wall 19, respectively. The front end wall 17 is flat or slightly curved as shown in Figure 2a in order to reach far into corners. As previously mentioned, the rotating brush 24 arranged on the protruding member 33 is advantageous for increasing the reach of the robotic cleaning device 10.

In yet a further embodiment, again with reference to Figure 2a, the main body 11 of the robotic cleaning device is arranged such that its width A is greatest laterally between an outermost point 32 of the horizontally protruding member 33 and the oppositely located side wall 18 (in this case being the left side wall) at the front end portion 16 of the main body, which is illustrated by means of the dotted line. The shape of the main body 11 of Figure 2a is generally referred to as a three-lobed form. Thus, the width A is the greatest distance measured across the main body 11, advantageously facilitating navigation of corners and narrow spaces such as corridors. Hence, the width A is greater than or equal to width B defined from a rear end portion 20 of the main body 11 to the front end wall 17.

Now, if the greatest width A is located closer to the drive shaft 14, i.e. the greatest width coincides with the rotational axis of the drive shaft 14, it will have the advantage that the geometry of the main body 11 will be adapted to turn around in a narrow space (such as a narrow corridor, as will be illustrated herein below). If on the other hand the greatest width A is located closer to the front end wall, it will have the advantage that the cleaning member 15 can be made as long as possible in a lateral direction of the main body 11. In practice, a compromise can be made by shaping the main body such that the greatest width A is located somewhere between the shaft 14 and the front end wall 17.

In Figure 2a, the back of the rear end portion 20 is pointed, meaning that the rear end portion 20 is formed by the right side wall 18 and the left side wall 19 connecting at the back of the rear end portion. However, it is possible that the back of the rear end portion 20 alternatively is flat or slightly curved, in which case a rear end wall would connect to the right side wall 18 and the left side wall 19, respectively, and form the back of the rear end portion 20.

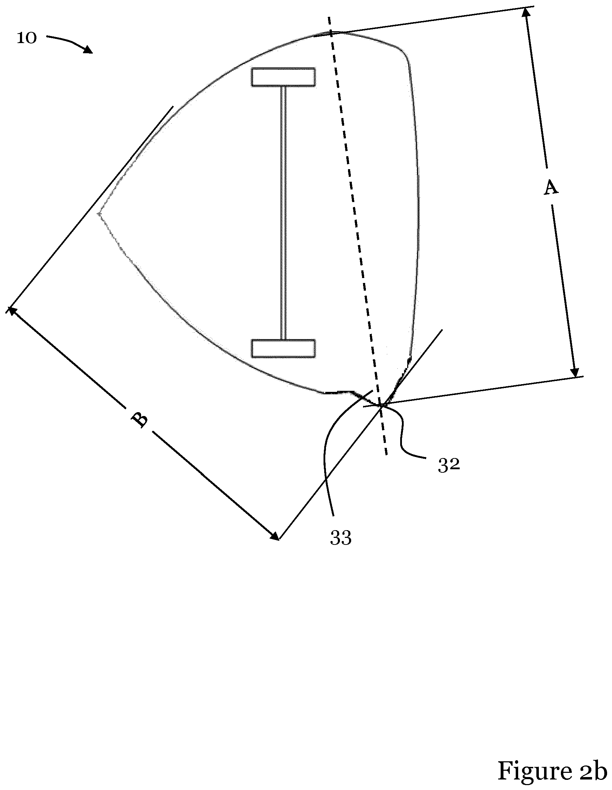

Figure 2b, shows the robotic cleaning device 10 according to the embodiment of Figure 2a, but without the rotating brush 24 in order to clearly illustrate the outer-most point 32 of the protruding member 33.

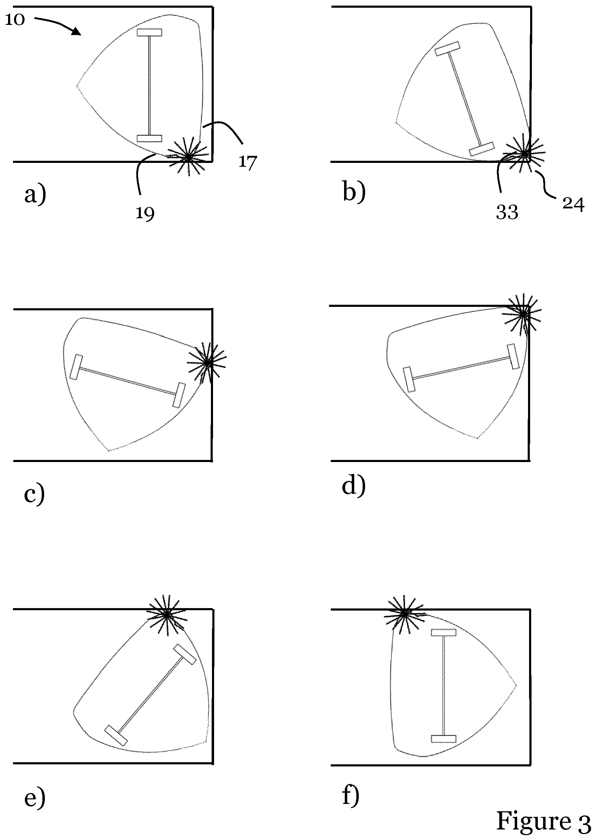

Figure 3 illustrates a bottom view sequence a-f of movements of the robotic cleaning device 10 of the embodiment of the present invention as shown in Figure 2 navigating into and out of two corners in a narrow corridor. In Figure 3a, the robotic cleaning device navigates into the corner via a wall leading into the corner. The front end wall 17 of the main body faces the wall leading out of the corner while the left side wall 19 faces the wall leading into of the corner. It should be noted that in practice, the front end wall 17 and side end walls 18, 19, are not flush against the walls of the corner to be cleaned, but the robotic cleaning device 10 is generally navigated such that they are located approximately 2-10 mm from the walls.

In Figure 3b, the robotic cleaning device 10 is rotated such that the curved left side wall 19 follows the wall leading into the first corner while the front end wall 17 at one of its outer ends follows the wall leading out of the corner. Further, it can be seen that the protruding member 33 reaches all the way into the first corner, thereby enabling for the brush 24 to sweep debris out of the corner such that the cleaning member of the robotic cleaning device can remove the debris. The rotation continues in Figure 3c, where the protruding member 33 practically is flush against the wall.

With reference to Figure 3d, it can be seen that the protruding member 33 reaches all the way into the second corner, thereby enabling for the brush 24 to sweep debris out of the corner such that the cleaning member of the robotic cleaning device can remove the debris. In Figure 3e, the robotic cleaning device 10 moves out of the second corner and finally in Figure 3f, the cleaning device has made a 90-degree turn in the second corner and is ready to pursue the wall leading out of the corner or make another 90-degree turn.

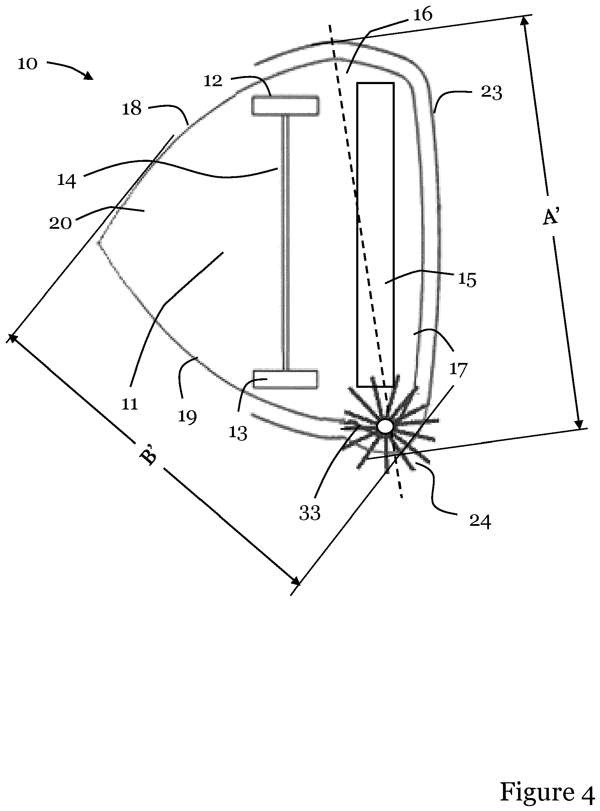

Thus, as can be deduced from Figure 3, the robotic cleaning device 10 according to the present invention advantageously navigates corners and difficult-to-access spaces like narrow corridors while still navigating very close to the walls leading into and out of the corners, thereby facilitating removal of debris from the floor at a very close range from the walls. The symmetry of the main body 11 further allows the robotic device 10 to take a corner from either a right or a left direction with the same cleaning effect, should the main body 11 be arranged with two protruding members 33 and brushes 24, one of each at each side of the front end wall 17. Figure 4 illustrates still another embodiment of the present invention, where the robotic cleaning device 10 further comprises a flexible bumper 23. It should be noted that the greatest width A' of the main body 11 is at the same location in the front end portion 16 as for the embodiment shown in Figures 2a and b. Further, for illustrative purposes, the distance between the bumper 23 and the front end portion 16 is somewhat exaggerated; in practice the bumper 23 is arranged flush against the front end wall 17. In analogy with Figure 2a, the lateral width A' from the right side wall 18 to the outermost point of the protruding member 33 is greater than the width B' taken from bumper 23 arranged at the front end wall 17 to the right side wall 18. The flexible bumper 23 covers at least the front end portion 16 of the main body 11, and extends in an embodiment of the present invention to the rotational axis of the drive shaft 14 on which the driving wheels 12, 13 are coaxially arranged. Thus, as long as the robotic cleaning device 10 rotates or moves forward, the only part of the main body 11 that can run into obstacles is the bumper 23, implying that collisions with all obstacles can be detected by the bumper 23. Further, since the bumper 23 is flexible, it will press resiliently against the front end wall 17 when contacting obstacles, thus mitigating the thrusting effect it has on obstacles in its way and reducing the risk that the obstacles will be displaced, tip over and/or be damaged.

As previously mentioned, the robotic cleaning device 10 according to an embodiment of the present invention comprises obstacle detecting means, which in an embodiment are implemented by means of the bumper 23 being flexibly mounted to the main body 11. The bumper cooperates with one or more sensors (not shown) registering when the robotic cleaning device 10 runs against an obstacle thus causing pressing of the bumper 23 against the main body 11. The bumper 23 and the sensor(s) hence function as obstacle detecting means communicating with the microprocessor arranged in the main body 11 to control the cleaning device motor to rotate the driving wheels 12, 13 as required in view of navigation information received by the obstacle detecting means.

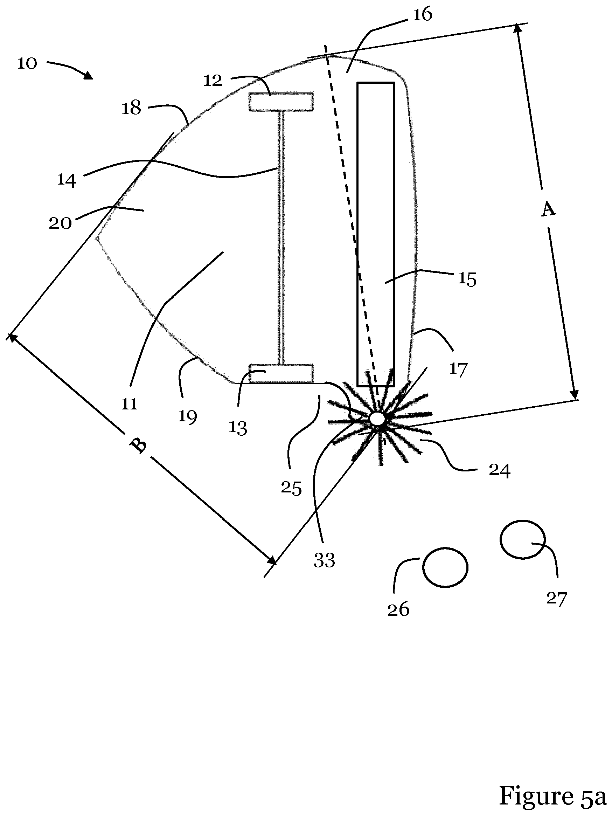

Figure 5a shows still another embodiment of the present invention, where the robotic cleaning device 10 shown in Figure 4 further is arranged with an indentation 25 or cut-in right behind the rotatable side brush 24. This is advantageous since the side brush 24 can reach around the periphery of smaller obstacles, such as chair legs 26, 27. Further, should the robotic cleaning device 10 comprise two side brushes, a respective indentation is arranged at the side brushes. The main body 11 of the robotic cleaning device 10 is arranged such that its width A is greatest laterally between the right side wall 18 and the left side wall 19 at the front end portion 16 of the main body, which is illustrated by means of the dotted line (i.e. the same width as that illustrated in Figures 2a and b). Thus, the width A is the greatest distance measured across the main body 11, advantageously facilitating navigation of corners. Hence, the width A is greater than or equal to width B defined from a rear end portion 20 of the main body 11 to the front end wall 17.

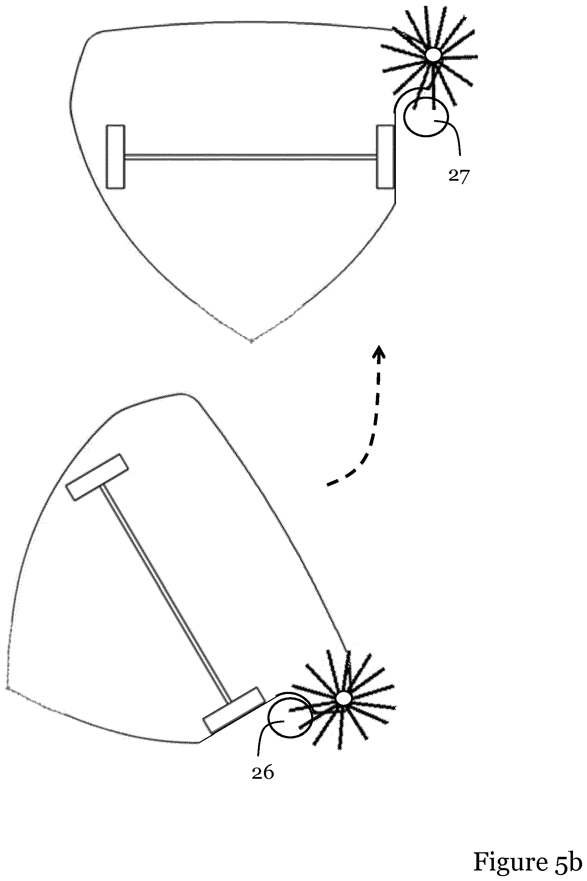

Figure 5b shows how the robotic cleaning device according to the embodiment discussed in Figure 5a moves such that first object 26 is placed in the indentation such that the side brush can each around and clean the first object 26. Thereafter, the robotic cleaning device moves towards a second object 27 and places it in the indentation such that cleaning around the second object 27 can be undertaken.

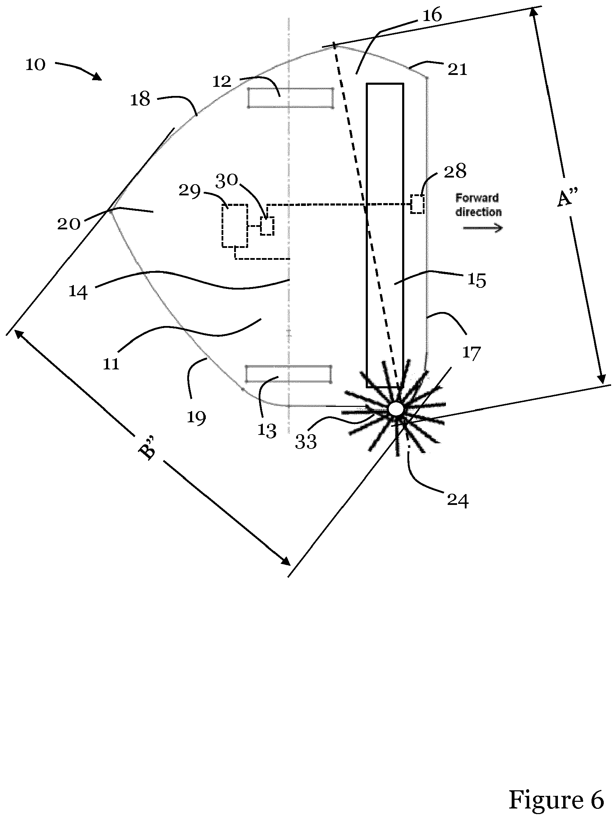

Figure 6 shows a robotic cleaning device 10 according to a further embodiment of the present invention. In contrast to the embodiment shown e.g. in Figure 2a and b (when omitting the protruding member 33), the contour of the main body 11 of the robotic cleaning device 10 is in this particular embodiment asymmetric. The main body 11 of the robotic cleaning device 10 is arranged such that its width A" is greatest laterally between the right side wall 18 and the outermost point of the protruding member 33 on which the rotating brush 24 is arranged, which is illustrated by means of the dotted line. Thus, the width A" is the greatest distance measured across the main body 11, advantageously facilitating navigation of corners. Hence, the width A" is greater than or equal to width B" defined from a rear end portion 20 of the main body 11 to the front end wall 17.

The robotic cleaning device 10 according to the embodiment shown in figure 6 could further be arranged with an indentation 25 as previously discussed with reference to Figures 5a and b.

Even though the invention has been described with reference to specific exemplifying embodiments thereof, many different alterations, modifications and the like will become apparent for those skilled in the art. The described embodiments are therefore not intended to limit the scope of the invention, as defined by the appended claims.

## Claims

1. Robotic cleaning device (10) comprising:
a main body (11);
at least one driving wheel (12, 13) arranged to move the robotic cleaning device (10) across a surface to be cleaned;
driving means (29) arranged to control the at least one driving wheel (12, 13) to rotate in order to move the robotic cleaning device (10) across the surface to be cleaned;
control means (30) arranged to control the driving means (29) to move the robotic cleaning device across the surface to be cleaned in accordance with navigation information; and
a cleaning member (15) arranged at a bottom side of the main body for removing debris from the surface to be cleaned **characterized in that** the cleaning member (15) being arranged in a front end portion (16) of the main body and **in that**
the main body (11) comprises at the front end portion (16), a horizontally protruding member (33) on which a brush (24) is arranged.

2. The robotic cleaning device (10) of claim 1, the brush being a rotating brush.

3. The robotic cleaning device (10) of claims 1 or 2, the main body (11) having a circular shape.

4. The robotic cleaning device (10) of claims 1 or 2, the main body (11) having a front end portion (16) with a front end wall (17), a rear end portion (20), a right side wall (18) connecting the front end wall (17) and the rear end portion (20) and a left side wall (19) connecting the front end wall (17) and the rear end portion (20).

5. The robotic cleaning device (10) of claim 4, the main body (11) further being arranged such that its width (A) is greatest between an outermost point (32) of the horizontally protruding member (33) and the oppositely located side wall (18, 19), said greatest width (A) being located at the front end portion (16) of the main body (11).

6. The robotic cleaning device (10) of claims 4 or 5, the right side wall (18) and the left side wall (19) being arranged to be curved.

7. The robotic cleaning device (10) of any one of claims 4-7, a rear end wall (31) of the main body (11) connecting the right side wall (18) and the left side wall (19) being arranged to be substantially flat.

8. The robotic cleaning device (10) of any one of the preceding claims, said cleaning member (15) comprising a rotatable brush roll vertically arranged in an opening in the bottom side of the main body (11).

9. The robotic cleaning device (10) of any one of the preceding claims, said cleaning member (15) being arranged adjacent to the front end wall (17) and extending laterally in the opening in the main body (11) along a greater part of said front end wall (17).

10. The robotic cleaning device (10) of any one of the preceding claims, further comprising obstacle detecting means (28) arranged to detect obstacles and provide the control means (30) with the navigation information for enabling navigation of the robotic cleaning device (10).

11. The robotic cleaning device (10) of any one of the preceding claims, further comprising a flexible bumper (23) enclosing at least the front end portion (16) of the main body (11).

12. The robotic cleaning device (10) of claim 11, said obstacle detecting means (28) comprising:
the flexible bumper (23) and at least one sensor with which the flexible bumper (23) is arranged to cooperate in order to register the robotic cleaning device (10) contacting an obstacle, said sensor being arranged to communicate the navigation information to the control means (30).

13. The robotic cleaning device (10) of any one of the preceding claims, the at least one driving wheel (12, 13) comprising at least a pair of coaxially arranged driving wheels (12, 13), each wheel being arranged at a respective side wall (18, 19) of the main body (11).

14. The robotic cleaning device (10) of claims 11 and 12, said flexible bumper (23) extending along the main body (11) to a rotational axis of a drive shaft (14) on which the driving wheels (12, 13) are coaxially arranged.

15. The robotic cleaning device (10) of any one of the preceding claims, further comprising:
an indentation (25) arranged in the front end portion (16) of the main body (11) adjacent to the protruding member (33).

## Patentansprüche

1. Reinigungsrobotervorrichtung (10), Folgendes umfassend:
einen Hauptkörper (11);
mindestens ein Antriebsrad (12, 13), das dazu angeordnet ist, die Reinigungsrobotervorrichtung (10) über eine zu reinigende Oberfläche zu bewegen;
eine Antriebseinrichtung (29), die dazu angeordnet ist, das mindestens eine Antriebsrad (12, 13) zu steuern, sich zu drehen, um die Reinigungsrobotervorrichtung (10) über die zu reinigende Oberfläche zu bewegen;
eine Steuerungseinrichtung (30), die dazu angeordnet ist, die Antriebseinrichtung (29) zu steuern, die Reinigungsrobotervorrichtung in Übereinstimmung mit Navigationsinformationen über die zu reinigende Oberfläche zu bewegen; und
ein Reinigungselement (15), das an einer Unterseite des Hauptkörpers angeordnet ist, um Verschmutzungen von der zu reinigenden Oberfläche zu entfernen, **dadurch gekennzeichnet, dass** das Reinigungselement (15) in einem vorderen Endabschnitt (16) des Hauptkörpers angeordnet ist, und dass der Hauptkörper (11) am vorderen Endabschnitt (16) ein horizontal vorstehendes Element (33) umfasst, auf dem eine Bürste (24) angeordnet ist.

2. Reinigungsrobotervorrichtung (10) nach Anspruch 1, wobei die Bürste eine sich drehende Bürste ist.

3. Reinigungsrobotervorrichtung (10) nach Anspruch 1 oder 2, wobei der Hauptkörper (11) kreisförmig ist.

4. Reinigungsrobotervorrichtung (10) nach Anspruch 1 oder 2, wobei der Hauptkörper (11) einen vorderen Endabschnitt (16) mit einer vorderen Stirnwand (17), einen hinteren Endabschnitt (20), eine rechte Seitenwand (18), die die vordere Stirnwand (17) mit dem hinteren Endabschnitt (20) verbindet, und eine linke Seitenwand (19), die die vordere Stirnwand (17) mit dem hinteren Endabschnitt (20) verbindet, aufweist.

5. Reinigungsrobotervorrichtung (10) nach Anspruch 4, wobei der Hauptkörper (11) ferner derart angeordnet ist, dass seine Breite (A) zwischen einem äußersten Punkt (32) des horizontal vorstehenden Elements (33) und der entgegengesetzt angeordneten Seitenwand (18, 19) am größten ist, wobei sich die größte Breite (A) am vorderen Endabschnitt (16) des Hauptkörpers (11) befindet.

6. Reinigungsrobotervorrichtung (10) nach Anspruch 4 oder 5, wobei die rechte Seitenwand (18) und die linke Seitenwand (19) dazu angeordnet sind, gekrümmt zu sein.

7. Reinigungsrobotervorrichtung (10) nach einem der Ansprüche 4-7, wobei eine hintere Stirnwand (31) des Hauptkörpers (11), die die rechte Seitenwand (18) mit der linken Seitenwand (19) verbindet, dazu angeordnet ist, im Wesentlichen eben zu sein.

8. Reinigungsrobotervorrichtung (10) nach einem der vorstehenden Ansprüche, wobei das Reinigungselement (15) eine drehbare Bürstenwalze umfasst, die in einer Öffnung in der Unterseite des Hauptkörpers (11) vertikal angeordnet ist.

9. Reinigungsrobotervorrichtung (10) nach einem der vorstehenden Ansprüche, wobei das Reinigungselement (15) an die vordere Stirnwand (17) angrenzend angeordnet ist und sich seitlich in die Öffnung im Hauptkörper (11) entlang des größten Teils der vorderen Stirnwand (17) erstreckt.

10. Reinigungsrobotervorrichtung (10) nach einem der vorstehenden Ansprüche, ferner eine Hinderniserfassungseinrichtung (28) umfassend, die dazu angeordnet ist, Hindernisse zu erfassen und der Steuerungseinrichtung (30) Navigationsinformationen bereitzustellen, um die Navigation der Reinigungsrobotervorrichtung (10) zu ermöglichen.

11. Reinigungsrobotervorrichtung (10) nach einem der vorstehenden Ansprüche, ferner eine flexible Stoßstange (23) umfassend, die zumindest den vorderen Endabschnitt (16) des Hauptkörpers (11) umschließt.

12. Reinigungsrobotervorrichtung (10) nach Anspruch 11, wobei die Hinderniserfassungseinrichtung (28) Folgendes umfasst:
die flexible Stoßstange (23) und mindestens einen Sensor, mit dem die flexible Stoßstange (23) zusammenwirkt, um zu registrieren, wenn die Reinigungsrobotervorrichtung (10) ein Hindernis berührt, wobei der Sensor dazu angeordnet ist, die Navigationsinformationen an die Steuerungseinrichtung (30) zu senden.

13. Reinigungsrobotervorrichtung (10) nach einem der vorstehenden Ansprüche, wobei das mindestens eine Antriebsrad (12, 13) mindestens ein Paar koaxial angeordneter Antriebsräder (12, 13) umfasst, wobei jedes Rad an einer jeweiligen Seitenwand (18, 19) des Hauptkörpers (11) angeordnet ist.

14. Reinigungsrobotervorrichtung (10) nach Anspruch 11 und 12, wobei sich die flexible Stoßstange (23) entlang des Hauptkörpers (11) zu einer Drehachse einer Antriebswelle (14) erstreckt, auf der die Antriebsräder (12, 13) koaxial angeordnet sind.

15. Reinigungsrobotervorrichtung (10) nach einem der vorstehenden Ansprüche, ferner Folgendes umfassend:
eine Einkerbung (25), die im vorderen Endabschnitt (16) des Hauptkörpers (11) an das vorstehende Element (33) angrenzend angeordnet ist.

## Revendications

1. Dispositif de nettoyage robotisé (10) comprenant :
un corps principal (11) ;
au moins une roue motrice (12, 13) disposée de sorte à déplacer le dispositif de nettoyage robotisé (10) sur une surface à nettoyer ;
un moyen d'entraînement (29) conçu pour commander la rotation de l'au moins une roue motrice (12, 13) afin de déplacer le dispositif de nettoyage robotisé (10) sur la surface à nettoyer ;
un moyen de commande (30) conçu pour commander le moyen d'entraînement (29) afin de déplacer le dispositif de nettoyage robotisé sur la surface à nettoyer conformément aux informations de navigation ; et
un élément de nettoyage (15) disposé sur un côté inférieur du corps principal pour enlever les débris de la surface à nettoyer, **caractérisé en ce que** l'élément de nettoyage (15) est disposé dans une partie d'extrémité avant (16) du corps principal et **en ce que** le corps principal (11) comprend, au niveau de la partie d'extrémité avant (16), un élément (33) faisant saillie horizontalement sur lequel est disposée une brosse (24).

2. Dispositif de nettoyage robotisé (10) selon la revendication 1, la brosse étant une brosse rotative.

3. Dispositif de nettoyage robotisé (10) selon la revendication 1 ou 2, le corps principal (11) ayant une forme circulaire.

4. Dispositif de nettoyage robotisé (10) selon la revendication 1 ou 2, le corps principal (11) ayant une partie d'extrémité avant (16) avec une paroi d'extrémité avant (17), une partie d'extrémité arrière (20), une paroi latérale droite (18) reliant la paroi d'extrémité avant (17) et la partie d'extrémité arrière (20) et une paroi latérale gauche (19) reliant la paroi d'extrémité avant (17) et la partie d'extrémité arrière (20).

5. Dispositif de nettoyage robotisé (10) selon la revendication 4, le corps principal (11) étant en outre disposé de sorte que sa largeur (A) soit la plus grande entre un point le plus à l'extérieur (32) de l'élément (33) faisant saillie horizontalement et la paroi latérale (18, 19) située à l'opposé, ladite largeur (A) la plus grande étant située au niveau de la partie d'extrémité avant (16) du corps principal (11).

6. Dispositif de nettoyage robotisé (10) selon la revendication 4 ou 5, la paroi latérale droite (18) et la paroi latérale gauche (19) étant disposées de sorte à être courbées.

7. Dispositif de nettoyage robotisé (10) selon l'une quelconque des revendications 4 à 7, une paroi d'extrémité arrière (31) du corps principal (11) reliant la paroi latérale droite (18) et la paroi latérale gauche (19) étant disposée de sorte à être sensiblement plate.

8. Dispositif de nettoyage robotisé (10) selon l'une quelconque des revendications précédentes, ledit élément de nettoyage (15) comprenant un rouleau de brosse rotatif disposé verticalement dans une ouverture dans le côté inférieur du corps principal (11).

9. Dispositif de nettoyage robotisé (10) selon l'une quelconque des revendications précédentes, ledit élément de nettoyage (15) étant disposé adjacent à la paroi d'extrémité avant (17) et s'étendant latéralement dans l'ouverture du corps principal (11) le long d'une plus grande partie de ladite paroi d'extrémité avant (17).

10. Dispositif de nettoyage robotisé (10) selon l'une quelconque des revendications précédentes, comprenant en outre un moyen de détection d'obstacle (28) conçu pour détecter des obstacles et fournir au moyen de commande (30) les informations de navigation pour permettre la navigation du dispositif de nettoyage robotisé (10).

11. Dispositif de nettoyage robotisé (10) selon l'une quelconque des revendications précédentes, comprenant en outre un pare-chocs flexible (23) entourant au moins la partie d'extrémité avant (16) du corps principal (11).

12. Dispositif de nettoyage robotisé (10) selon la revendication 11, ledit moyen de détection d'obstacle (28) comprenant :
le pare-chocs flexible (23) et au moins un capteur avec lequel le pare-chocs flexible (23) est conçu pour coopérer afin d'enregistrer le contact du dispositif de nettoyage robotisé (10) avec un obstacle, ledit capteur étant conçu pour communiquer les informations de navigation au moyen de commande (30).

13. Dispositif de nettoyage robotisé (10) selon l'une quelconque des revendications précédentes, l'au moins une roue motrice (12, 13) comprenant au moins une paire de roues motrices (12, 13) disposées coaxialement, chaque roue étant disposée au niveau d'une paroi latérale (18, 19) respective du corps principal (11).

14. Dispositif de nettoyage robotisé (10) selon les revendications 11 et 12, ledit pare-chocs flexible (23) s'étendant le long du corps principal (11) jusqu'à un axe de rotation d'un arbre d'entraînement (14) sur lequel les roues motrices (12, 13) sont disposées coaxialement.

15. Dispositif de nettoyage robotisé (10) selon l'une quelconque des revendications précédentes, comprenant en outre :
un renfoncement (25) disposé dans la partie d'extrémité avant (16) du corps principal (11) adjacent à l'élément (33) faisant saillie.
